# EUROPÄISCHE PATENTSCHRIFT

(11) **EP 3 670 254 B1**
(45) Veröffentlichungstag und Bekanntmachung des Hinweises auf die Patenterteilung: **21.07.2021**
(21) Anmeldenummer: 19210387.7
(22) Anmeldetag: 20.11.2019
(51) Int. Cl.: B60N 2/38, B60N 2/868

(54) **FAHRZEUGSITZ MIT VERSTELLFUNKTION**
VEHICLE SEAT WITH ADJUSTMENT FUNCTION
SIÈGE DE VÉHICULE DOTÉ D'UNE FONCTION DE RÉGLAGE

(30) Priorität: 18.12.2018 DE 102018132594
(43) Veröffentlichungstag der Anmeldung: 24.06.2020
(73) Patentinhaber: GRAMMER AG, 92289 Ursensollen (DE)
(72) Erfinder: Ruidisch, Michael, 92269 Högling (DE)
(74) Vertreter: Hannke, Christian

(56) Entgegenhaltungen:
- EP-A1- 2 818 357
- EP-A1- 2 818 358
- DE-A1-102006 052 207
- DE-T5-112011 100 763
- FR-A1- 2 929 185

## Beschreibung

Die Erfindung betrifft einen Fahrzeugsitz mit einem Sitzteil und einem Rückenlehnenteil, welches einen ersten Rückenlehnenabschnitt und einen in Sitzhöhenrichtung oberhalb davon angeordneten zweiten Rückenlehnenabschnitt umfasst, wobei der zweite Rückenlehnenabschnitt gegenüber dem ersten Rückenlehnenabschnitt mittels einer zumindest in Sitzbreitenrichtung gerichteten Verlagerungsbewegung verlagerbar ist.

Es ist aus dem Stand der Technik bekannt, Fahrzeugsitze wie beispielsweise Nutzfahrzeugsitze von Traktoren, Baumaschinen oder Gabelstaplern mit Verstellfunktionen auszustatten. Diese betreffen beispielsweise einen ersten Teil der Rückenlehne, gegenüber welchem ausgehend von einer Grundstellung ein zweiter Teil der Rückenlehne in eine verlagerte Position verlagerbar ist. Um nämlich eine gute Abstützung und damit eine ausreichend gute Entlastung des Fahrzeugführers zu gewährleisten, sollte eine Abstützfläche in allen Fahrpositionen immer möglichst groß sein, auch wenn der Fahrer zwischen zwei extrem unterschiedlichen Fahrpositionen wechselt. Aus dem Dokument EP 2 818 358 A1 ist eine gattungsgemässe Arretiervorrichtung bekannt.

Beispielsweise kann der Fahrer, welcher das Lenkrad mit seiner linken Hand hält, durch Applikation von Druck mit seiner rechten Schulter auf den zweiten Teil der Rückenlehne diese Verlagerung initiieren. Anschließend kann er seine Schulter oder den oberen Rücken an diesem Teil der Rückenlehne abstützen und den Blick nach hinten richten, um den Bereich hinter dem Fahrzeug besser beobachten zu können.

Wenn wie beschrieben nur ein Teil der Rückenlehne verlagert ist, hat sich dies als platzsparend innerhalb einer Fahrzeugkabine erwiesen, insbesondere gegenüber einer Lösung, welche eine Rotation des gesamten Fahrzeugsitzes um eine Achse in Sitzhöhenrichtung vorschlägt. Dies ist besonders relevant aufgrund der Entwicklung der letzten Jahre, gemäß welcher Fahrzeuge wie Traktoren durch zusätzliche Funktionen und Anbauten immer schwerer und deren Räder somit immer breiter werden müssen, ohne dass jedoch die Gesamtbreite des Fahrzeugs größer werden darf, da sonst dessen Straßenzulassung gefährdet ist.

Soll die Verlagerung des zweiten Teils der Rückenlehne wieder rückgängig gemacht werden, ist es bisher aus dem Stand der Technik beispielsweise bekannt, den zweiten Teil der Rückenlehne händisch wieder zurückzuschieben. Der Nachteil dieser bisherigen Lösungen liegt darin, dass der Fahrer die Hand am Lenkrad von diesem lösen und seinen Rücken erst wieder zurück in die andere Richtung drehen muss, um diese Rückverlagerung initiieren zu können.

Es ist daher Aufgabe vorliegender Erfindung, einen gattungsgemäßen Fahrzeugsitz so weiterzuentwickeln, dass die Rückverlagerung möglichst einfach und zeitsparend initiiert werden kann.

Die Aufgabe der Erfindung wird gelöst von einem Fahrzeugsitz mit einem Sitzteil und einem Rückenlehnenteil, welches einen ersten Rückenlehnenabschnitt und einen in Sitzhöhenrichtung oberhalb davon angeordneten zweiten Rückenlehnenabschnitt umfasst, wobei der zweite Rückenlehnenabschnitt gegenüber dem ersten Rückenlehnenabschnitt mittels einer zumindest in Sitzbreitenrichtung gerichteten Verlagerungsbewegung verlagerbar ist. Erfindungsgemäß ist in einer ersten verlagerten Position des zweiten Rückenlehnenabschnitts zwischen dem ersten Rückenlehnenabschnitt und dem zweiten Rückenlehnenabschnitt eine die erste verlagerte Position des zweiten Rückenlehnenabschnitts sichernde mechanische Wechselwirkung ausgebildet, welche mittels einer auf den zweiten Rückenlehnenabschnitt aufgebrachten und in Richtung der Verlagerungsbewegung wirkenden Kraft lösbar ist.

Damit kann die Kraft auf den zweiten Rückenlehnenabschnitt, welche dessen Verlagerungsbewegung, beispielsweise ausgehend von einer Grundposition als nicht-verlagerte Position, auslöst, in die gleiche Richtung appliziert werden wie die Kraft, welche dessen Rückverlagerungsbewegung, beispielsweise ausgehend von der ersten verlagerten Position, initiiert. Der Fahrer muss den zweiten Rückenlehnenabschnitt also beispielsweise einmal mit seiner rechten Schulter (Fall 1) (oder linken Schulter, Fall 2) verschieben, um die Verlagerungsbewegung zu initiieren, und entsprechend nochmals mit seiner rechten Schulter (Fall 1) (oder linken Schulter, Fall 2) antippen, um die Rückverlagerungsbewegung zu initiieren, wobei bei beiden Vorgängen der Richtungsvektor der Kraft ausgehend von der linken Schulter (Fall 1) (oder rechten Schulter, Fall 2) zumindest der Verlagerungsbewegung folgt und/oder im Wesentlichen gleich ist. "Im Wesentlichen gleich" heißt in diesem Zusammenhang, dass hier berücksichtigt wird, dass der zweite Rückenlehnenabschnitt in der Grundposition gegebenenfalls eine in Relation zum Fahrer und/oder zur Sitzbreitenrichtung geänderte Ausrichtung aufweist.

Dass die Verlagerungsbewegung zumindest in Sitzbreitenrichtung gerichtet ist, bedeutet, dass die Richtung dieser Verlagerungsbewegung ausschließlich oder zumindest Anteile aufweist, die in Sitzbreitenrichtung weisen; sie kann aber darüber hinaus auch zusätzliche Anteile aufweisen, welche in Sitzlängsrichtung und/oder Sitzhöhenrichtung weisen. Bevorzugt weist die Richtung der Verlagerungsbewegung stets einen Anteil in die gleiche Sitzbreitenrichtung auf, ist also zumindest anteilig entweder in die linke Sitzbreitenrichtung oder in die rechte Sitzbreitenrichtung, aber nicht in die linke und in die rechte Sitzbreitenrichtung gerichtet.

Vorteilhaft ist der zweite Rückenlehnenabschnitt gegenüber dem ersten Rückenlehnenabschnitt derart anordenbar, dass der auf dem Fahrzeugsitz sitzende Fahrzeugführer während einer seitlich oder rückwärtig ausgerichteten Sitzarbeitshaltung zumindest in Höhe seines Schulter- und/oder Brustkorbbereichs außermittig seitlich der Rückenlehne abgestützt ist.

Der zweite Rückenlehnenabschnitt ist dabei also so ausgestaltet, dass er in Sitzhöhenrichtung oberhalb des ersten Rückenlehnenabschnitts angeordnet ist. Zudem ist der zweite Rückenlehnenabschnitt bevorzugt so ausgestaltet, dass er zumindest in der Grundposition frei von Abschnitten ist, welche die Begrenzungsflächen des ersten Rückenlehnenabschnitts in Sitzlängsrichtung und/oder in Sitzbreitenrichtung überragend angeordnet sind.

Der erste Rückenlehnenabschnitt kann mit dem Sitzteil entweder starr oder schwenkbar um eine Achse, die bevorzugt in Sitzbreitenrichtung verlaufend angeordnet ist, verbunden sein. Das Sitzteil und mit ihm der gesamte Fahrzeugsitz kann gegenüber einem Sitzunterbau, welcher beispielsweise starr mit der Karosserie des Fahrzeugs verbunden ist, entweder starr oder schwenkbar um eine Achse, die bevorzugt in Sitzhöhenrichtung verlaufend angeordnet ist, verbunden sein.

Bevorzugt stellen die beiden seitlichen, die vordere und/oder die hintere Begrenzungsfläche des zweiten Rückenlehnenabschnitts jeweils eine stetige geometrische Fortsetzung der entsprechenden Begrenzungsflächen des ersten Rückenlehnenabschnitts dar, welche gegebenenfalls durch einen Trennspalt zwischen dem ersten und dem zweiten Rückenlehnenabschnitt unterbrochen ist. Es können also bevorzugt die seitlichen, die vordere und/oder die hintere Begrenzungsfläche des zweiten Rückenlehnenabschnitts jeweils durch die gleiche räumliche Flächengleichung beschrieben werden wie ihre entsprechenden Gegenstücke aus den Begrenzungsflächen des ersten Rückenlehnenabschnitts.

Es ist also bevorzugt vorgesehen, dass der zweite Rückenlehnenabschnitt entweder nach links oder nach rechts oder sogar in beide Richtungen gegenüber dem ersten Rückenlehnenabschnitt verschoben werden kann. Beispielsweise wäre es denkbar, dass ein rechtshändiger Fahrer eine Verlagerungsbewegung bevorzugt, deren Richtung in die rechte Sitzbreitenrichtung weist, um die linke Schulter abstützen zu können. Es ist allerdings einfach für einen Fachmann, einen spiegelverkehrten Fahrzeugsitz zu entwickeln, um somit auch einem linkshändigen Fahrer einen passenden Sitz bereitzustellen.

Bevorzugt ist der zweite Rückenlehnenabschnitt im Wesentlichen bis zur Hälfte seiner Gesamtbreite gegenüber dem ersten Rückenlehnenabschnitt verlagerbar. Vorteilhaft ist die Richtung der Verlagerungsbewegung über die gesamte Dauer der Verlagerungsbewegung nicht konstant; d.h. die Richtung der Verlagerungsbewegung folgt bevorzugt nicht einer Geraden, sondern beispielsweise einer zwei- oder dreidimensionalen Kurve oder einer Kurve mit unterschiedlichen Abschnitten, welche gerade oder gekrümmt ausgestaltet sein können.

Bevorzugt ist die erste verlagerte Position die einzige verlagerte Position, welche mittels der oben beschriebenen mechanischen Wechselwirkung gesichert ist. Es existiert bevorzugt mindestens eine Extremposition, in welcher der zweite Rückenlehnenabschnitt maximal gegenüber dem ersten Rückenlehnenabschnitt verlagert ist. Bevorzugt ist die erste verlagerte Position nicht diese Extremposition.

Um die Relativposition des zweiten Rückenlehnenabschnitts gegenüber dem ersten Rückenlehnenabschnitt in der ersten verlagerten Position zu sichern, ist bevorzugt eine Arretiereinrichtung vorgesehen, welche bevorzugt einen am ersten Rückenlehnenabschnitt angeordneten ersten Arretierabschnitt und einen am zweiten Rückenlehnenabschnitt angeordneten zweiten Arretierabschnitt umfasst, wobei der erste Arretierabschnitt bevorzugt eine Kurvenkulisse umfasst, welche Führungskurvenabschnitte aufweist, innerhalb welcher ein erstes Ende eines Hakenelements des zweiten Arretierabschnitts führbar ist, und welche eine Arretierposition aufweist, an welcher das Hakenelement arretierbar ist. Bevorzugt ist die Kurvenkulisse Teil eines Kulissenelements, welches beispielsweise als Gussteil oder als Zerspanungsteil ausgestaltet ist.

Es ist also angedacht, dass sich das Hakenelement während der Verlagerungs- und/oder Rückverlagerungsbewegung in Relation zur Kurvenkulisse bewegt, sich beispielsweise auf diese zu- oder von dieser wegbewegt, während die Kurvenkulisse ihre Position nicht ändert. Bevorzugt ist das Hakenelement in der Grundposition des zweiten Rückenlehnenabschnitts von der Kurvenkulisse beabstandet, steht also mit dieser nicht im Eingriff.

Das Hakenelement wird im Laufe der Verlagerungsbewegung also mit der Kurvenkulisse in Eingriff gebracht. Bevorzugt ist das Hakenelement so angeordnet, dass der Eingriff mit der Kurvenkulisse automatisch erfolgt, sobald der zweite Rückenlehnenabschnitt ausreichend weit gegenüber dem ersten Rückenlehnenabschnitt verlagert ist. Es existiert also vorteilhaft eine zweite verlagerte Position des zweiten Rückenlehnenabschnitts, in welcher das erste Ende des Hakenelements direkt benachbart zu einem Eingang der Kurvenkulisse angeordnet ist. Bevorzugt weist die Kurvenkulisse nur einen einzigen Eingang auf und ist ansonsten als geschlossene Kurvenkulisse ausgebildet. Aufgrund der speziellen Form der Kurvenkulisse kann diese auch als "Herzkurve" bezeichnet werden.

Um das erste Ende des Hakenelements in der Kurvenkulisse bewegen zu können, ist es gemäß einer vorteilhaften Ausführungsform angedacht, dass das Hakenelement des zweiten Arretierabschnitts mittels eines zweiten Endes schwenkbar um eine Achse, welche in der ersten verlagerten Position des zweiten Rückenlehnenabschnitts bevorzugt senkrecht zur Kurvenkulisse angeordnet ist, gelagert ist. Bevorzugt weist das Hakenelement ausschließlich diesen einen rotatorischen Freiheitsgrad und/oder keine translatorischen Freiheitsgrade auf.

Bevorzugt ist zusätzlich ein Federelement angeordnet, welches mit dem zweiten Ende des Hakenelements und mit einem mittleren Abschnitt des Hakenelements verbunden ist. Dieses Federelement ist beispielsweise als elastisches Kunststoffteil ausgestaltet und dient zur Positionssicherung einer Ausgangsposition des Hakenelements, wenn dieses noch nicht mit der Kurvenkulisse im Eingriff steht. Bevorzugt erlaubt dieses Federelement aufgrund seiner elastischen Eigenschaften eine Drehung des Hakenelements um die Achse in dem Maße, wie es die Form der Kurvenkulisse erfordert, und führt ansonsten das Hakenelement wieder in dessen Ausgangsposition zurück, wenn dessen erstes Ende nicht mehr im Eingriff mit der Kurvenkulisse steht. Dies ist beispielsweise ab dann der Fall, wenn der zweite Rückenlehnenabschnitt bei der Rückverlagerungsbewegung wieder die zweite verlagerte Position eingenommen hat.

Es sei erwähnt, dass im Sinne der vorliegenden Erfindung die Bezeichnungen "erste verlagerte Position", "zweite verlagerte Position", etc. keine Aussage über die zeitliche Reihenfolge erlauben, innerhalb welcher der zweite Rückenlehnenabschnitt diese verlagerten Positionen ausgehend von der Grundposition bei der Verlagerungsbewegung oder bei der Rückverlagerungsbewegung einnimmt. So wird bevorzugt bei der Verlagerungsbewegung ausgehend von der Grundposition zunächst die zweite verlagerte Position, dann eine erste der Extrempositionen und dann die erste verlagerte Position erreicht, welche gesichert ist. Wird wie oben beschrieben die Rückverlagerungsbewegung initiiert und die Sicherung der ersten verlagerten Position aufgehoben, erreicht der zweite Rückenlehnenabschnitt ausgehend von der ersten verlagerten Position zunächst eine zweite der Extrempositionen und dann erneut die erste verlagerte Position, bevor er in die Grundposition zurückkehrt.

Bevorzugt ist mittels der Wechselwirkung zwischen dem Hakenelement und der Kurvenkulisse gewährleistet, dass die Bewegung des Hakenelements innerhalb der Kurvenkulisse immer nur in eine Richtung, beispielsweise im Uhrzeigersinn, aber nicht gegen den Uhrzeigersinn, durchführbar ist. Bevorzugt umfasst die Kurvenkulisse ein Stoppelement, welches verhindert, dass das Hakenelement aus der ersten verlagerten Position zur ersten Extremposition zurückgeführt wird.

Vorteilhaft ist ferner das Hakenelement so angeordnet, dass dessen erstes Ende beim Durchlaufen der Kurvenkulisse entlang seines Wegs kontaktierend zur hinteren Begrenzungsfläche ausgestaltet ist. Es ist zusätzlich vorteilhaft, wenn die hintere Begrenzungsfläche der Kurvenkulisse Stufenabschnitte aufweist, welche entlang der Richtung des Wegs aufeinanderfolgend angeordnet sind, wobei jeweils ein Stufenabschnitt gegenüber dem ihm in Richtung des Wegs vorausgehenden Stufenabschnitt abfallend ausgestaltet ist. Damit wird ebenfalls verhindert, dass das erste Ende des Hakenelements entgegen der Richtung des Wegs (beispielsweise gegen den Uhrzeigersinn) zurückgeführt wird.

Um eine automatische Rückkehr des zweiten Rückenlehnenabschnitts in die Grundposition zu ermöglichen, hat es sich als vorteilhaft erwiesen, wenn eine Rückstelleinrichtung vorgesehen ist, welche ein mit dem ersten Rückenlehnenabschnitt und dem zweiten Rückenlehnenabschnitt verbundenes Energiespeicherelement umfasst, welches geeignet und dazu ausgebildet ist, eine aus der Verlagerungsbewegung des zweiten Rückenlehnenabschnitts gegenüber dem ersten Rückenlehnenabschnitt zur Verfügung gestellte erste Energiemenge zu speichern und zur Durchführung einer Rückverlagerungsbewegung des zweiten Rückenlehnenabschnitts gegenüber dem ersten Rückenlehnenabschnitt zur Verfügung zu stellen.

Die Energie, welche mittels der Verlagerungsbewegung aufgewandt wird, ist also bevorzugt mittels des Energiespeicherelements zumindest temporär speicherbar. Eine Abschätzung der Energiemenge kann dabei über das Produkt des Gesamtwegs des zweiten Rückenlehnenabschnitts, welcher mittels der Verlagerungsbewegung durchgeführt wird, und der dafür notwendigen Kraft erfolgen.

Bevorzugt ist das Energiespeicherelement in Form eines Federelements, beispielsweise eines Bandfederelements oder eines Zugfederelements, ausgestaltet. Dieses Federelement wird beispielsweise bei der Verlagerungsbewegung gedehnt und zieht sich nach Aufhebung der mechanischen Sicherung selbsttätig wieder zusammen, so dass die Energie wieder freigegeben wird.

Ferner ist es vorteilhaft, wenn zwischen dem ersten Rückenlehnenabschnitt und dem zweiten Rückenlehnenabschnitt eine Dämpfungseinrichtung angeordnet ist, welche geeignet und dazu ausgebildet ist, eine bei der Rückverlagerungsbewegung des zweiten Rückenlehnenabschnitts gegenüber dem ersten Rückenlehnenabschnitt zur Verfügung gestellte überschüssige zweite Energiemenge zu dissipieren. Diese überschüssige Energiemenge stammt beispielsweise aus der Vorspannung des Energiespeicherelements.

Beispielsweise ist die Dämpfungseinrichtung als Visko-Bremse (Silikonbremse) mit Freilauf (in Richtung der Verlagerungsbewegung) ausgestaltet, welche bevorzugt durch eine Umwandlung der Linearbewegung des zweiten Rückenlehnenabschnitts in eine rotatorische Bewegung von in Fluid gelagerten Bremsscheiben Reibung erzeugt und somit Energie dissipiert. Alternativ kann sie als Lineardämpfer ausgestaltet sein. Durch die Dämpfungseinrichtung wird der Komfort dem Benutzer gegenüber erhöht, da die Rückverlagerungsbewegung stoßfrei ablaufen kann.

Um die beschriebenen Bewegungsabläufe realisieren und gleichzeitig eine vereinfachte Mechanik bereitstellen zu können, hat es sich als vorteilhaft erwiesen, wenn ein Befestigungselement des Energiespeicherelements, der erste Arretierabschnitt und/oder die Dämpfungseinrichtung an einem gemeinsamen mit dem ersten Rückenlehnenabschnitt verbundenen Montageelement montiert und/oder zueinander starr angeordnet sind. Bevorzugt ist das Montageelement mit dem ersten Rückenlehnenabschnitt starr verbunden, beispielsweise über ein Flanschelement.

Bevorzugt ist ferner der zweite Rückenlehnenabschnitt mittels einer Führungseinrichtung am ersten Rückenlehnenabschnitt befestigt, wobei die Verlagerungsbewegung des zweiten Rückenlehnenabschnitts mittels der Führungseinrichtung durchführbar ist.

Ferner umfasst die Führungseinrichtung bevorzugt das Montageelement und zwei in Sitzhöhenrichtung zueinander beabstandet angeordnete stangenförmige Führungselemente, wobei das Montageelement gegenüber zumindest einem der Führungselemente gleit- und/oder wälzgelagert ist. Bevorzugt sind die Führungselemente der Führungseinrichtung starr mit dem zweiten Rückenlehnenabschnitt verbunden und/oder über dessen gesamte Breite (in Sitzbreitenrichtung) angeordnet.

Bevorzugt ist die Richtung der Verlagerungsbewegung einem Verlauf der Führungselemente folgend ausgestaltet. Bevorzugt weisen die Führungselemente eine Wölbung auf, welche in Bezug auf ihre Gesamtbreite zumindest in der Grundposition des zweiten Rückenlehnenabschnitts in Sitzhöhenrichtung, beispielsweise nach oben, und/oder in Sitzlängsrichtung, beispielsweise nach hinten, weisend ausgestaltet ist.

Mittels der Gleitlagerung kann also das Montagelement gegenüber den Führungselementen verschoben und somit die Verlagerungsbewegung des zweiten Rückenlehnenabschnitts durchgeführt werden.

Im Sinne der vorliegenden Erfindung werden die Begriffe "Achse" und "Ebene" insbesondere auch im virtuellen Sinn benutzt. So müssen die vorliegenden erwähnten Achsen und Ebenen nicht zwangsweise mittels eines mechanischen Elements ausgebildet sein, sondern können zum besseren Verständnis der Geometrie des Fahrzeugsitzes auch als virtuelle Referenzelemente vorliegen.

Weitere Vorteile, Ziele und Eigenschaften vorliegender Erfindung werden anhand anliegender Zeichnung und nachfolgender Beschreibung erläutert, in welchen beispielhaft verschiedene Ausführungsformen des erfindungsgemäßen Fahrzeugsitzes dargestellt und beschrieben sind. In der Zeichnung zeigen:
- Fig. 1a: eine Vorderansicht eines erfindungsgemäßen Fahrzeugsitzes mit dem zweiten Rückenlehnenabschnitt in einer ersten verlagerten Position;
- Fig. 1b: eine Vorderansicht des Fahrzeugsitzes aus Fig. 1a mit dem zweiten Rückenlehnenabschnitt in einer Grundposition;
- Fig. 2: eine Vorderansicht des Fahrzeugsitzes aus Fig. 1a mit dem zweiten Rückenlehnenabschnitt in der ersten verlagerten Position;
- Fig. 3a: eine Seitenansicht des Fahrzeugsitzes aus Fig. 1a mit dem zweiten Rückenlehnenabschnitt in der ersten verlagerten Position;
- Fig. 3b: eine Seitenansicht des Fahrzeugsitzes aus Fig. 1a mit dem zweiten Rückenlehnenabschnitt in der Grundposition;
- Fig. 4a: eine Schnittansicht E1-E1 durch den Fahrzeugsitz gemäß der Fig. 3b entlang der markierten Ebene;
- Fig. 4b: eine Schnittansicht E2-E2 durch den Fahrzeugsitz gemäß der Fig. 1b entlang der markierten Ebene;
- Fig. 5a: eine Schnittansicht E3-E3 durch den Fahrzeugsitz gemäß der Fig. 2 entlang der markierten Ebene;
- Fig. 5b: eine Detailansicht der Fig. 5a;
- Fig. 6a, 6b: Draufsichten auf ein Kulissenelement mit einer Kurvenkulisse;
- Fig. 6c: eine perspektivische Ansicht des Kulissenelements gemäß den Figuren 6a und 6b.

Teil der Figuren ist jeweils ein kartesisches Koordinatensystem mit den Achsen 1x (Sitzlängsrichtung, Pfeilrichtung von vorne nach hinten), 1y (Sitzbreitenrichtung, Pfeilrichtung von links nach rechts) und 1z (Sitzhöhenrichtung, Pfeilrichtung von oben nach unten). Ebenfalls markiert ist eine virtuelle Ebene A, welche durch die Achsen 1x und 1z aufgespannt ist und den Fahrzeugsitz 1 in Sitzbreitenrichtung 1y mittig teilt.

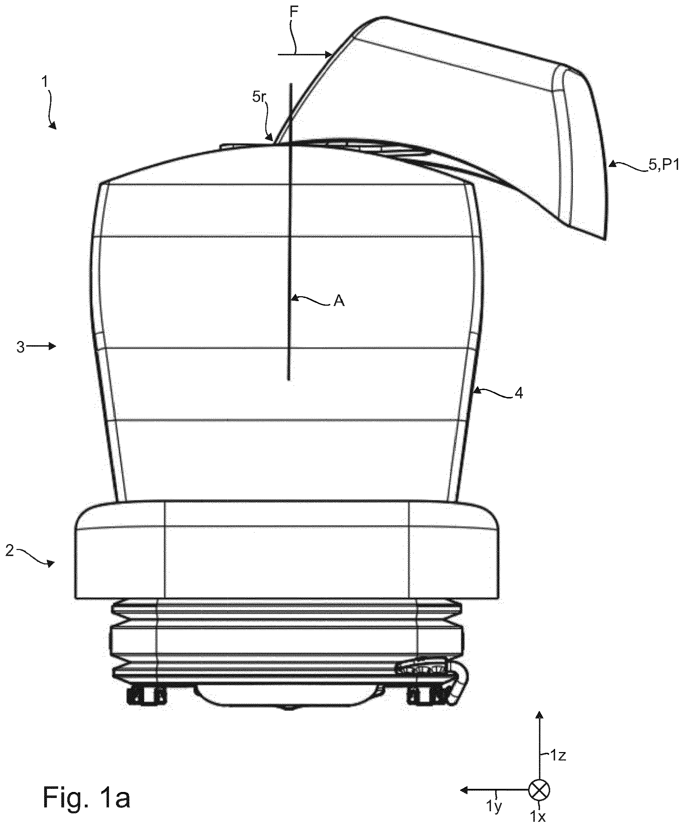

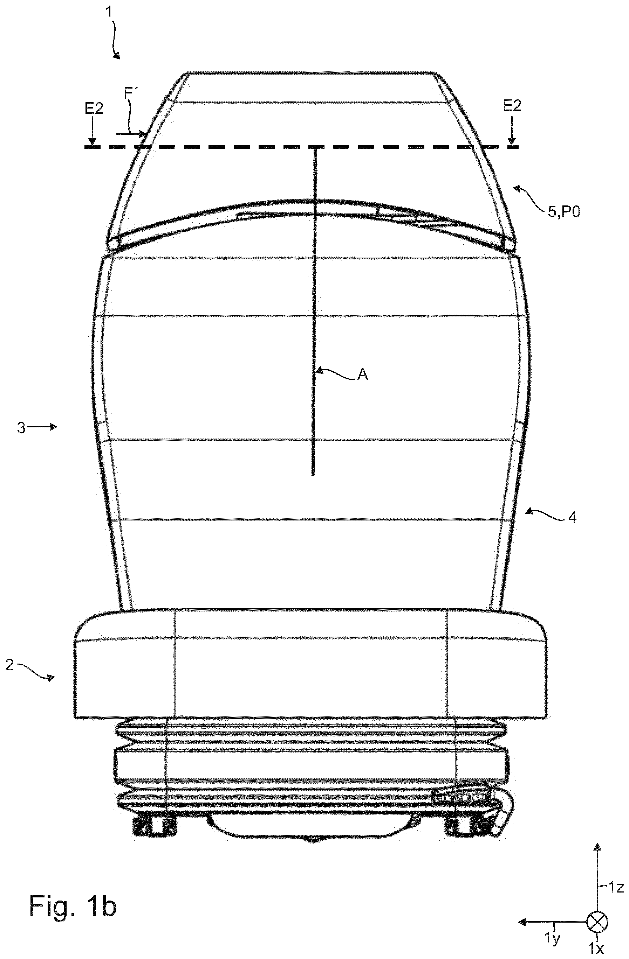

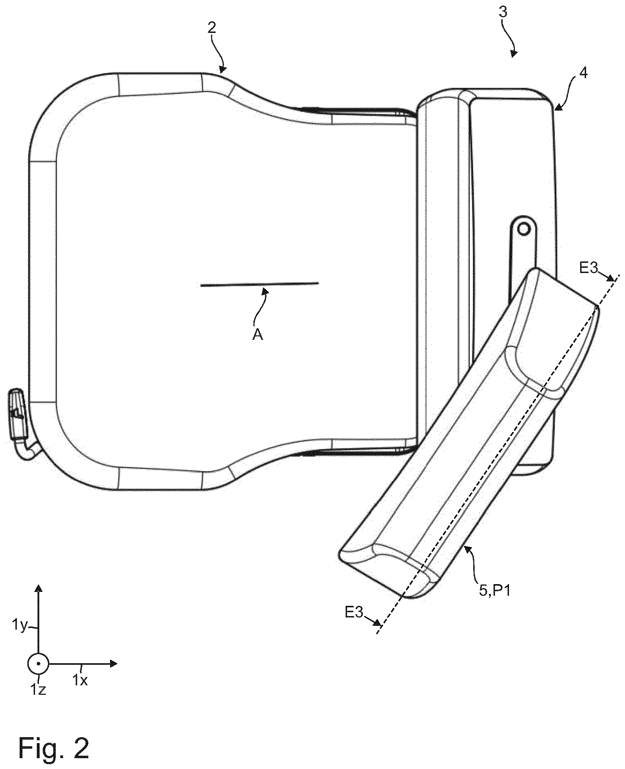

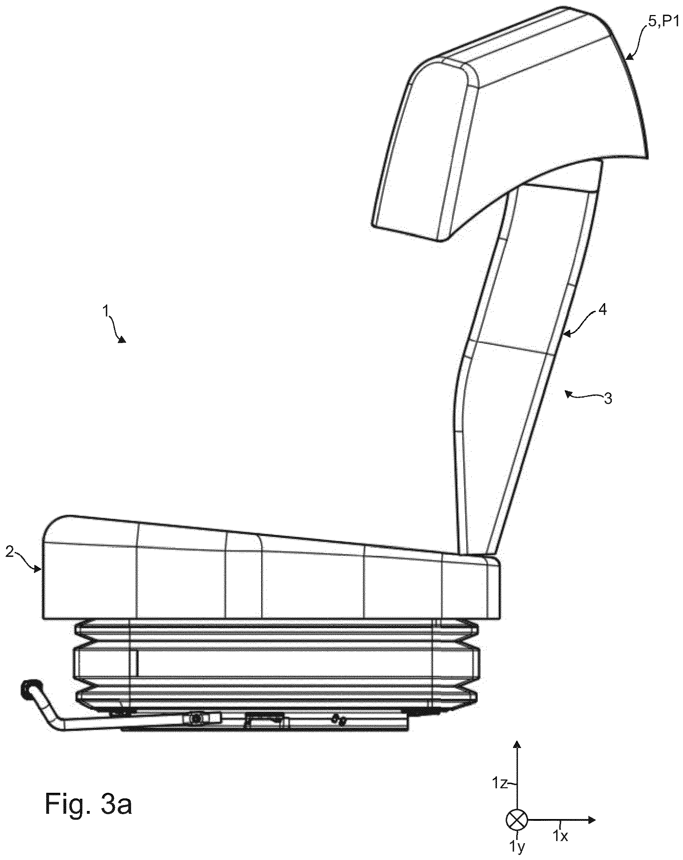

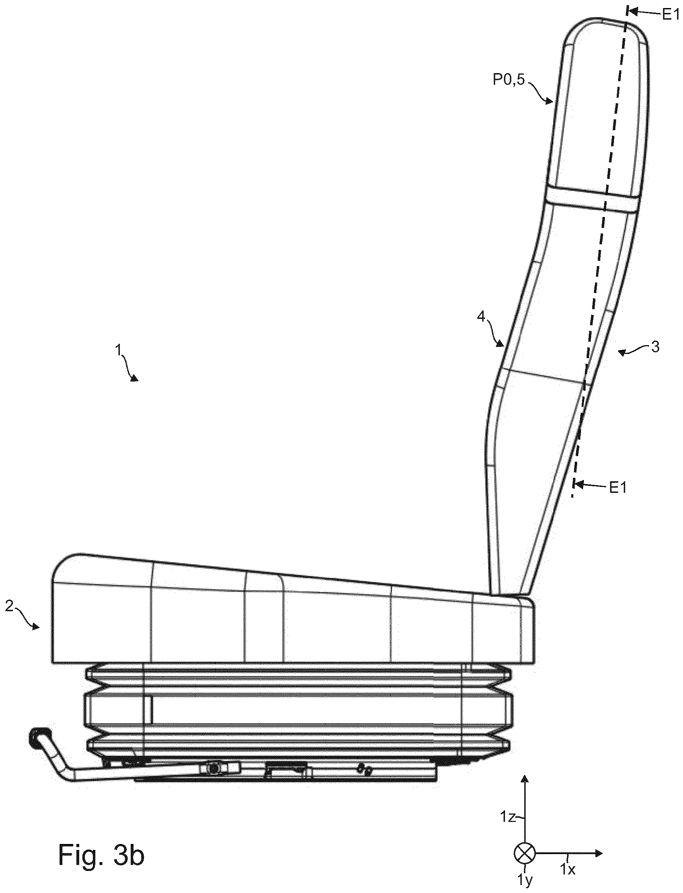

Die Figuren 1b, 3b, 4a und 4b zeigen jeweils eine Grundposition P0 des zweiten Rückenlehnen-abschnitts 5. Die Figuren 1a, 2, 3a, 5a und 5b zeigen jeweils eine erste verlagerte Position P1 des zweiten Rückenlehnenabschnitts 5.

Insbesondere die Figuren 1a bis 3b zeigen einen erfindungsgemäßen Fahrzeugsitz 1 mit einem Sitzteil 2 und einem Rückenlehnenteil 3, welches einen ersten Rückenlehnenabschnitt 4 und einen in Sitzhöhenrichtung 1z oberhalb davon angeordneten zweiten Rückenlehnenabschnitt 5 umfasst. Der zweite Rückenlehnenabschnitt 5 ist gegenüber dem ersten Rückenlehnenabschnitt 4 mittels einer zumindest in Sitzbreitenrichtung 1y gerichteten Verlagerungsbewegung verlagerbar.

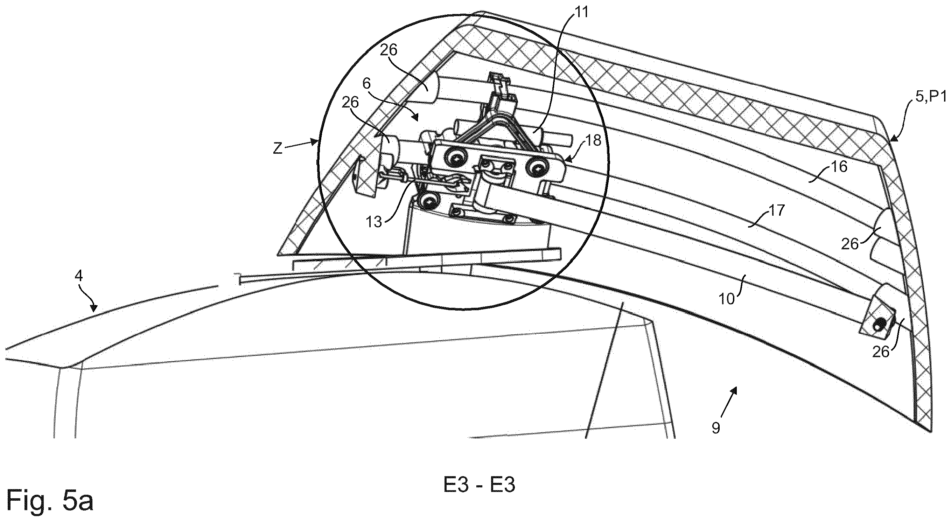

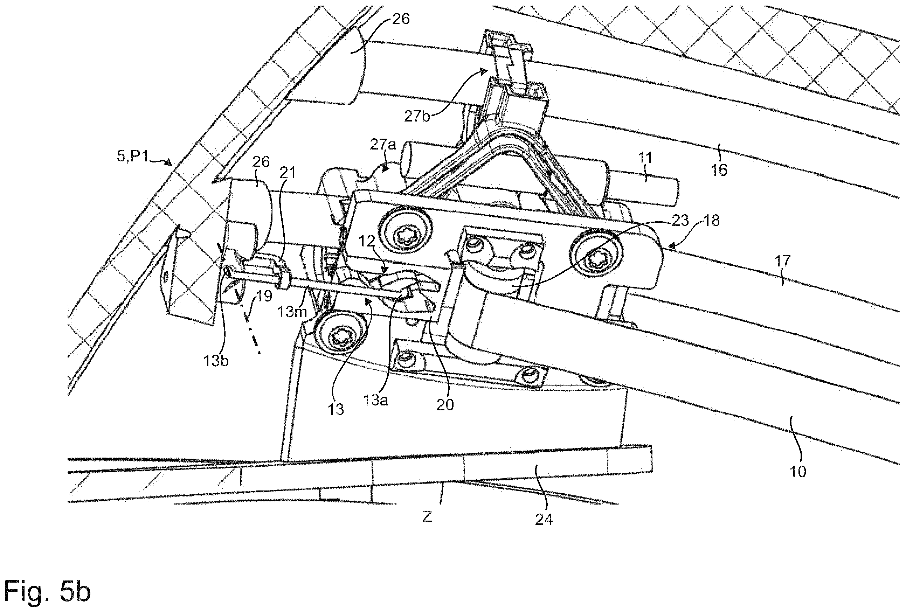

Die Figuren 5a und 5b zeigen, dass in einer ersten verlagerten Position P1 des zweiten Rückenlehnenabschnitts 5 zwischen dem ersten Rückenlehnenabschnitt 4 und dem zweiten Rückenlehnenabschnitt 5 eine die erste verlagerte Position P1 des zweiten Rückenlehnenabschnitts 5 sichernde mechanische Wechselwirkung ausgebildet ist, welche mittels einer auf den zweiten Rückenlehnenabschnitt 5 aufgebrachten und in Richtung der Verlagerungsbewegung wirkenden Kraft F lösbar ist. Ein Beispiel eines Richtungsvektors für die Kraft F ist gemäß der Fig. 1a gezeigt.

Ein Vergleich der Figuren 1a und 1b zeigt, dass eine Kraft F' auf den zweiten Rückenlehnenabschnitt 5, welche dessen Verlagerungsbewegung, beispielsweise ausgehend von der Grundposition P0 als nicht-verlagerte Position, auslöst, in die gleiche Richtung appliziert werden kann wie die Kraft F, welche dessen Rückverlagerungsbewegung, beispielsweise ausgehend von der ersten verlagerten Position P1, initiiert, wobei der Richtungsvektor der Kräfte F und F' im Wesentlichen gleich ist. "Im Wesentlichen gleich" heißt in diesem Zusammenhang, dass hier berücksichtigt wird, dass der zweite Rückenlehnenabschnitt 5 in der Grundposition P0 vorliegend eine in Relation zum Fahrer und/oder zur Sitzbreitenrichtung 1y geänderte Ausrichtung aufweist; dies gilt im Vergleich mit der ersten verlagerten Position P1.

Vorliegend ist ein Sitz 1 gezeigt, bei dem der zweite Rückenlehnenabschnitt 5 durch Druck mit der rechten Schulter verlagert werden kann. Die Kräfte F und F' weisen also, ebenso wie die Verlagerungsbewegung, ausschließlich oder zumindest Anteile auf, die in Sitzbreitenrichtung 1y weisen; sie können aber darüber hinaus auch zusätzliche Anteile aufweisen, welche in Sitzlängsrichtung 1x und/oder Sitzhöhenrichtung 1z weisen. Vorliegend weist die Richtung der Verlagerungsbewegung stets einen Anteil in die rechte Sitzbreitenrichtung 1y auf.

Der zweite Rückenlehnenabschnitt 5 kann also vorliegend ausgehend von der Grundposition P0 nach links, aber nicht in beide Richtungen gegenüber dem ersten Rückenlehnenabschnitt 4 verschoben werden.

Vorliegend ist der zweite Rückenlehnenabschnitt 5 im Wesentlichen bis zur Hälfte seiner Gesamtbreite gegenüber dem ersten Rückenlehnenabschnitt 4 verlagerbar (siehe Darstellung gemäß der Fig. 1a, gemäß welcher die Ebene A den zweiten Rückenlehnenabschnitt 5 an dessen seitlichen rechten Ende 5r schneidet). Die maximal verlagerte Position P3 oder P4 (Extremposition, siehe Erläuterung nachfolgend) ist gemäß den Figuren nicht dargestellt. Vorliegend ist die Richtung der Verlagerungsbewegung über den gesamten Verlauf der Verlagerungsbewegung nicht konstant.

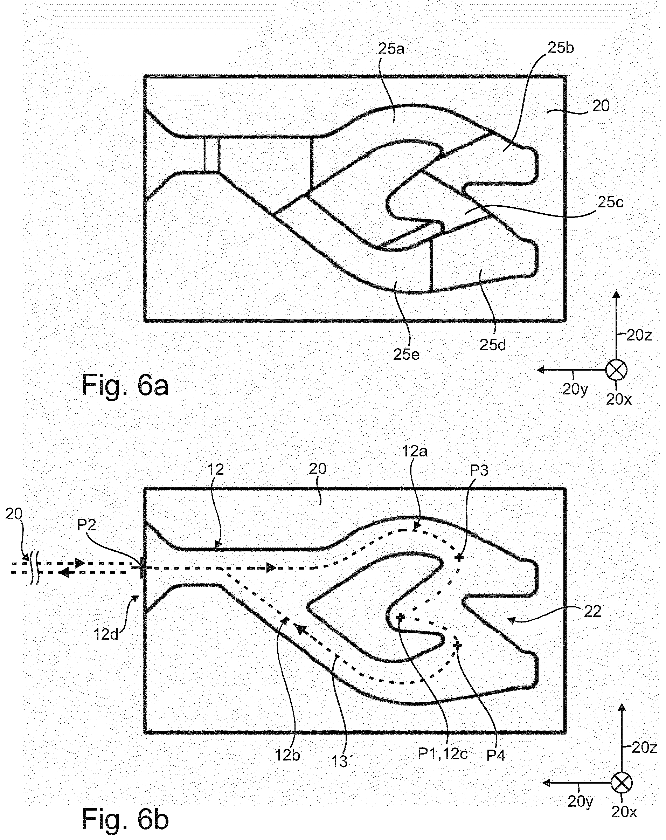

Vorliegend ist die erste verlagerte Position P1 die einzige verlagerte Position, welche mittels der oben beschriebenen mechanischen Wechselwirkung gesichert ist. Es existieren vorliegend zwei Extrempositionen P3 und P4 (siehe Erläuterungen zur Figur 6b unten), in welcher der zweite Rückenlehnenabschnitt 5 maximal und damit weiter als in der ersten verlagerten Position P1 gegenüber dem ersten Rückenlehnenabschnitt 4 verlagert ist. Vorliegend ist die erste verlagerte Position P1 keine dieser Extrempositionen P3 und P4.

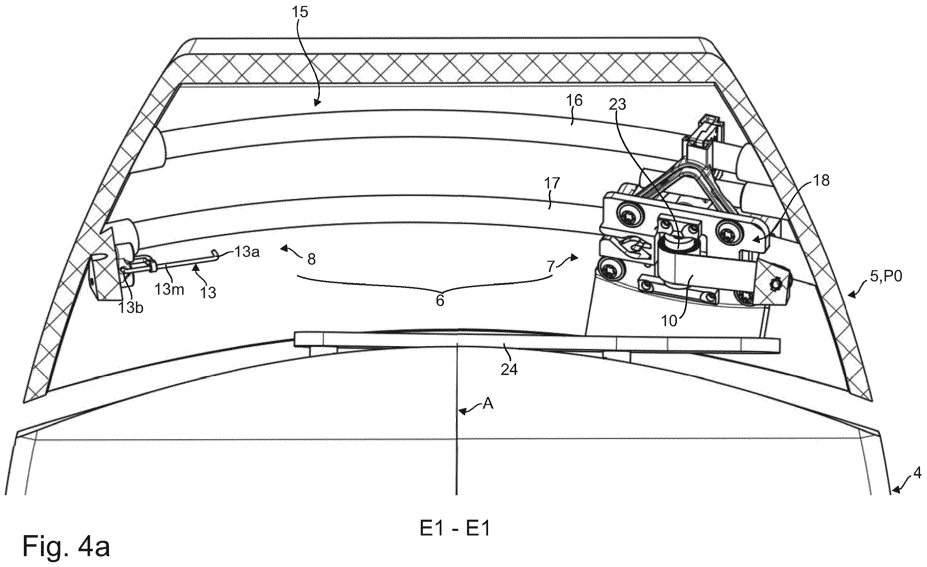

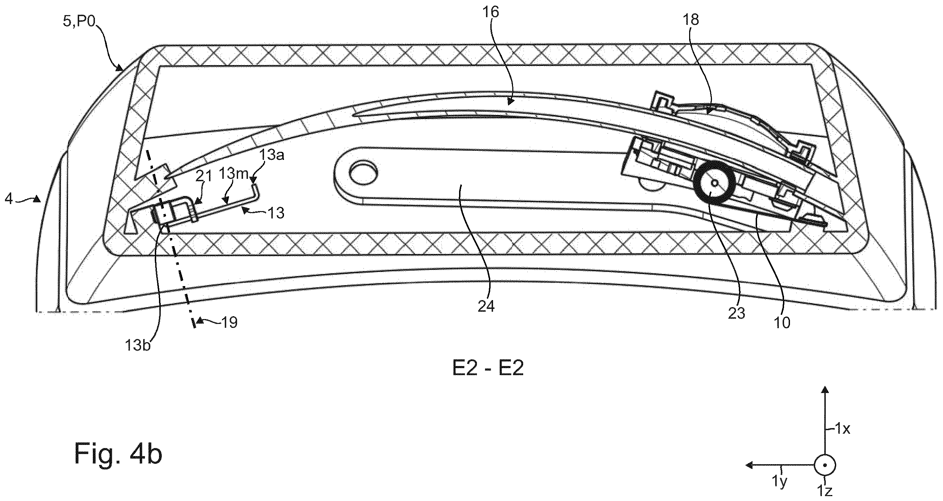

Die Figuren 4a, 4b, 5a und 5b zeigen, dass eine Arretiereinrichtung 6 vorgesehen ist, welche vorliegend einen am ersten Rückenlehnenabschnitt 4 angeordneten ersten Arretierabschnitt 7 und einen am zweiten Rückenlehnenabschnitt 5 angeordneten zweiten Arretierabschnitt 8 umfasst.

Der erste Arretierabschnitt 7 umfasst gemäß den Figuren 6a-c eine Kurvenkulisse 12, welche Führungskurvenabschnitte 12a, 12b aufweist, innerhalb welcher ein erstes Ende 13a eines Hakenelements 13 (nicht gezeigt gemäß den Figuren 6a-c, siehe hier insbesondere Fig. 5a) des zweiten Arretierabschnitts 8 führbar ist, und welche eine Arretierposition 12c aufweist, an welcher das Hakenelement 13 arretierbar ist. Diese Arretiereinrichtung 6 ist vorgesehen, die Relativposition des zweiten Rückenlehnenabschnitts 5 gegenüber dem ersten Rückenlehnenabschnitt 4 in der ersten verlagerten Position P1 zu sichern. Vorliegend ist die Kurvenkulisse 12 Teil eines Kulissenelements 20, was beispielsweise als Gussteil oder als Zerspanungsteil ausgestaltet ist. Ein mögliches Material wäre beispielsweise eine Zinklegierung oder auch Al-CuMgPb (Werkstoffnummer 3.1645).

Es ist also angedacht, dass sich das Hakenelement 13 während der Verlagerungs- und/oder Rückverlagerungsbewegung in Relation zur Kurvenkulisse 12 bewegt, sich beispielsweise auf diese zu- oder von dieser wegbewegt, während die Kurvenkulisse 12 ihre Position nicht ändert. Vorliegend ist das Hakenelement 13 in der Grundposition P0 des zweiten Rückenlehnenabschnitts 5 von der Kurvenkulisse 12 beabstandet, steht also mit dieser nicht im Eingriff (siehe Darstellungen gemäß Fig. 4a und 4b).

Das Hakenelement 13 wird im Laufe der Verlagerungsbewegung also mit der Kurvenkulisse 12 in Eingriff gebracht. Vorliegend ist das Hakenelement 13 so angeordnet, dass der Eingriff mit der Kurvenkulisse 12 automatisch erfolgt, sobald der zweite Rückenlehnenabschnitt 5 ausreichend weit gegenüber dem ersten Rückenlehnenabschnitt 4 verlagert ist. Es existiert also vorliegend eine zweite verlagerte Position P2 des zweiten Rückenlehnenabschnitts 5, in welcher das erste Ende des Hakenelements 13 direkt benachbart zu einem Eingang 12d der Kurvenkulisse 12 angeordnet ist (siehe Fig. 6b).

Vorliegend weist die Kurvenkulisse 12 nur diesen einen einzigen Eingang 12d auf und ist ansonsten als geschlossene Kurvenkulisse ausgebildet. Aufgrund der speziellen Form der Kurvenkulisse 12 kann diese auch als "Herzkurve" bezeichnet werden (siehe hier auch Darstellung gemäß der Fig. 6b).

Um das erste Ende des Hakenelements 13 in der Kurvenkulisse 12 bewegen zu können, ist es vorgesehen, dass das Hakenelement 13 des zweiten Arretierabschnitts 8 mittels eines zweiten Endes 13b schwenkbar um eine Achse 19, welche in der ersten verlagerten Position P1 des zweiten Rückenlehnenabschnitts 5 senkrecht zur Kurvenkulisse 12 angeordnet ist, gelagert ist (siehe Fig. 5a und 5b). Vorliegend weist das Hakenelement 13 ausschließlich diesen einen rotatorischen Freiheitsgrad und keine translatorischen Freiheitsgrade auf.

Vorliegend ist zusätzlich ein Federelement 21 angeordnet, welches mit dem zweiten Ende 13b des Hakenelements 13 und mit einem mittleren Abschnitt 13m des Hakenelements 13 verbunden ist. Dieses Federelement 21 ist in diesem Beispiel als elastisches Kunststoffteil ausgestaltet und dient zur Positionssicherung einer Ausgangsposition des Hakenelements 13, wenn dieses noch nicht mit der Kurvenkulisse 12 im Eingriff steht (wie beispielsweise anhand der Figuren 4a und 4b gezeigt). Vorliegend erlaubt dieses Federelement 21 aufgrund seiner elastischen Eigenschaften eine Drehung des Hakenelements 13 um die Achse 19 zumindest in dem Maße, wie es die Form der Kurvenkulisse 12 erfordert, und führt ansonsten das Hakenelement 13 wieder in dessen Ausgangsposition zurück, wenn dessen erstes Ende 13a nicht mehr im Eingriff mit der Kurvenkulisse 12 steht. Dies ist beispielsweise dann der Fall, wenn der zweite Rückenlehnenabschnitt 5 bei der Rückverlagerungsbewegung wieder die zweite verlagerte Position P2 eingenommen hat.

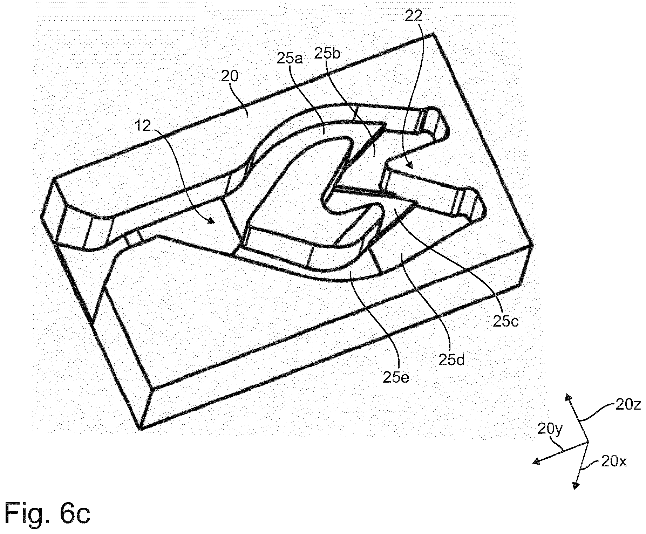

Die Figuren 6a, 6b, 6c zeigen ein Kulissenelement 20, innerhalb welchem die Kurvenkulisse 12 angeordnet ist. Ebenfalls eingezeichnet ist ein kartesisches Koordinatensystem mit den Achsen 20x (Längsrichtung des Kulissenelements 20), 20y (Breitenrichtung des Kulissenelements 20) und 20z (Höhenrichtung des Kulissenelements 20). Die Fig. 6a zeigt eine Draufsicht des Kulissenelements 20 mit einer hinteren Begrenzungsfläche 25 der Kurvenkulisse 12, welche also die Kurvenkulisse in Längsrichtung 20x des Kulissenelements 20 begrenzt. Die Fig. 6b zeigt die Draufsicht des Kulissenelements 20 ohne Details der hinteren Begrenzungsfläche 25. Die Fig. 6c zeigt eine perspektivische Ansicht des Kulissenelements 20.

Gestrichelt ist ein Weg 13' des ersten Endes 13a des Hakenelements 13 eingezeichnet, welches dieses bei einer Verlagerungs- bzw. Rückverlagerungsbewegung des oberen Rückenlehnenabschnitts 5 zurücklegt. Der Weg 13' ist dabei parallel oder im Wesentlichen parallel zur hinteren Begrenzungsfläche 25 verlaufend angeordnet.

Markiert sind dabei verschiedene Positionen P0, P1, P2, P3 und P4, welche zur jeweiligen Position des ersten Endes 13a des Hakenelements 13 korrespondierende Positionen des oberen Rückenlehnenabschnitts 5 darstellen. Die Position P1 ist gleichzeitig die Arretierposition 12c des ersten Endes 13a des Hakenelements 13; d.h. wenn der obere Rückenlehnenabschnitt 5 in seiner ersten verlagerten Position P1 ist, befindet sich das erste Ende 13a des Hakenelements 13 in der Arretierposition 12c.

So wird bei der Verlagerungsbewegung ausgehend von der Grundposition P0 zunächst die zweite verlagerte Position P2, dann eine erste P3 der Extrempositionen und dann die erste verlagerte Position P1 erreicht, welche gesichert ist. Wird wie oben beschrieben die Rückverlagerungsbewegung initiiert und die Sicherung der ersten verlagerten Position P1 aufgehoben, erreicht der zweite Rückenlehnenabschnitt 5 ausgehend von der ersten verlagerten Position P1 zunächst eine zweite P4 der Extrempositionen und dann erneut die erste verlagerte Position P2, bevor er in die Grundposition P0 zurückkehrt.

Vorliegend ist mittels der Wechselwirkung zwischen dem Hakenelement 13 und der Kurvenkulisse 12 gewährleistet, dass die Bewegung, mithin der Weg 13' des Hakenelements 13 innerhalb der Kurvenkulisse 12 immer nur in Uhrzeigersinn, aber nicht gegen den Uhrzeigersinn, durchführbar ist. Vorliegend umfasst die Kurvenkulisse 12 ein Stoppelement 22, welches verhindert, dass das Hakenelement 13 aus der ersten verlagerten Position P1 zur ersten Extremposition P3 zurückgeführt wird.

Ebenfalls ist das Hakenelement 13 so angeordnet, dass dessen erstes Ende 13a beim Durchlaufen der Kurvenkulisse 12 entlang seines Wegs 13' kontaktierend zur hinteren Begrenzungsfläche 25 ausgestaltet ist. Die hintere Begrenzungsfläche 25 der Kurvenkulisse 12 weist zudem Stufenabschnitte 25a-e auf, welche entlang der Richtung des Wegs 13' aufeinanderfolgend angeordnet sind, wobei jeweils ein Stufenabschnitt (beispielsweise 25b) gegenüber dem ihm in Richtung des Wegs 13' vorhergehenden Stufenabschnitt (beispielsweise 25a) abfallend und/oder stufenbehaftet nach hinten versetzt ausgestaltet ist. Damit wird ebenfalls verhindert, dass das erste Ende 13a des Hakenelements entgegen der Richtung des Wegs 13' zurückgeführt wird.

Um eine automatische Rückkehr des zweiten Rückenlehnenabschnitts 5 in die Grundposition P0 zu ermöglichen, ist vorliegend eine Rückstelleinrichtung 9 (siehe Fig. 5a und 5b) vorgesehen, welche ein mit dem ersten Rückenlehnenabschnitt 4 und dem zweiten Rückenlehnenabschnitt 5 verbundenes Energiespeicherelement 10 umfasst, welches geeignet und dazu ausgebildet ist, eine aus der Verlagerungsbewegung des zweiten Rückenlehnenabschnitts 5 gegenüber dem ersten Rückenlehnenabschnitt 4 zur Verfügung gestellte erste Energiemenge zu speichern und zur Durchführung einer Rückverlagerungsbewegung des zweiten Rückenlehnenabschnitts 5 gegenüber dem ersten Rückenlehnenabschnitt 4 zur Verfügung zu stellen.

Die Figuren 4a und 4b zeigen dieses Energiespeicherelement 10, welches vorliegend in Form eines Bandfederelements ausgestaltet ist, in einem vorgespannten Zustand, aber in einer Grundstellung. Die Figuren 5a und 5b zeigen dieses Energiespeicherelement 10 in einem ausgefahrenen Zustand. Bei einem Bandfederelement ist die Vorspannkraft vom Weg nahezu unabhängig. Denkbar wäre ebenfalls, ein Zugfederelement einzubauen, bei welchem seine Federspannung im ausgefahrenen (gedehnten) Zustand höher ist als im vorgespannten Zustand.

Vorliegend ist außerdem gezeigt, dass zwischen dem ersten Rückenlehnenabschnitt 4 und dem zweiten Rückenlehnenabschnitt 5 eine Dämpfungseinrichtung 11 angeordnet ist, welche geeignet und dazu ausgebildet ist, eine bei der Rückverlagerungsbewegung des zweiten Rückenlehnenabschnitts 5 gegenüber dem ersten Rückenlehnenabschnitt 4 zur Verfügung gestellte überschüssige zweite Energiemenge zu dissipieren. Vorliegend ist die Dämpfungseinrichtung 11 als Lineardämpfer ausgestaltet.

Vorliegend ist ein Befestigungselement 23 des Energiespeicherelements 10, der erste Arretierabschnitt 7 und/oder die Dämpfungseinrichtung 11 an einem gemeinsamen mit dem ersten Rückenlehnenabschnitt 4 verbundenen Montageelement 18 montiert und zueinander starr angeordnet. Gezeigt ist, dass das Montageelement 18 über ein Flanschelement 24 mit dem ersten Rückenlehnenabschnitt 4 starr verbunden ist.

Vorliegend ist ferner der zweite Rückenlehnenabschnitt 5 mittels einer Führungseinrichtung 15 am ersten Rückenlehnenabschnitt 4 befestigt, wobei die Verlagerungsbewegung des zweiten Rückenlehnenabschnitts 5 mittels der Führungseinrichtung 15 durchführbar ist.

Ferner umfasst die Führungseinrichtung 15 das Montageelement 18 und zwei in Sitzhöhenrichtung 1z zueinander beabstandet angeordnete stangenförmige Führungselemente 16, 17, wobei das Montageelement 18 gegenüber beiden Führungselementen 16, 17 mittels einer Gleitlagerung 27 gleitgelagert ist. Vorliegend weisen die Führungselemente 16, 17 eine Wölbung auf, welche zumindest in Grundposition P0 des zweiten Rückenlehnenabschnitts 5 in Sitzhöhenrichtung 1z (siehe Ansicht gemäß der Fig. 4a) und in Sitzlängsrichtung (siehe Ansicht gemäß der Fig. 4b) weisend ausgestaltet ist.

Die Gleitlagerung 27 umfasst dabei einen ersten Gleitlagerabschnitt 27a, mittels welchem das Montageelement 18 gegenüber einem unteren 17 der stangenförmigen Führungselemente 16, 17 gleitgelagert ist, sowie einen zweiten Gleitlagerabschnitt 27b, mittels welchem das Montageelement 18 gegenüber einem oberen 16 der stangenförmigen Führungselemente 16, 17 gleitgelagert ist. Vorliegend ist die Dämpfungseinrichtung 11 in Sitzhöhenrichtung 1z zwischen den beiden Führungselementen 16, 17 angeordnet.

Vorliegend sind die Enden der Führungselemente 16, 17 über Hülsen 26 jeweils starr mit dem zweiten Rückenlehnenabschnitt 5 verbunden und über dessen gesamte Breite (in Sitzbreitenrichtung 1y) angeordnet.

Es versteht sich, dass es sich bei dem vorstehend erläuterten Ausführungsbeispiel lediglich um eine erste Ausgestaltung des erfindungsgemäßen Fahrzeugsitzes handelt. Insofern beschränkt sich die Ausgestaltung der Erfindung nicht auf dieses Ausführungsbeispiel.

### Bezugszeichenliste

- 1: Fahrzeugsitz
- 1x: Sitzlängsrichtung
- 1y: Sitzbreitenrichtung
- 1z: Sitzhöhenrichtung
- 2: Sitzteil
- 3: Rückenlehnenteil
- 4, 5: Rückenlehnenabschnitt
- 5r: rechtes Ende
- 6: Arretiereinrichtung
- 7, 8: Arretierabschnitt
- 9: Rückstelleinrichtung
- 10: Energiespeicherelement
- 11: Dämpfungseinrichtung
- 12: Kurvenkulisse
- 12a, 12b: Führungskurvenabschnitt
- 12c: Arretierposition
- 13: Hakenelement
- 13a,13b: Ende
- 15: Führungseinrichtung
- 16, 17: stangenförmiges Führungselement
- 18: Montageelement
- 19: Achse
- 20: Kulissenelement
- 20x: Längsrichtung
- 20y: Breitenrichtung
- 20z: Höhenrichtung
- 21: Federelement
- 22: Stoppelement
- 23: Befestigungselement
- 24: Flanschelement
- 25: Begrenzungsfläche
- 25a-e: Stufenabschnitt
- 26: Hülse
- 27: Gleitlagerung
- 27a, b: Gleitlagerabschnitt
- A, E1, E2, E3: Ebene
- F, F': Kraft
- P0: Grundposition
- P1: erste verlagerte Position
- P2: zweite verlagerte Position
- P3, P4: Extremposition

## Patentansprüche

1. Fahrzeugsitz (1) mit einem Sitzteil (2) und einem Rückenlehnenteil (3), welches einen ersten Rückenlehnenabschnitt (4) und einen in Sitzhöhenrichtung (1z) oberhalb davon angeordneten zweiten Rückenlehnenabschnitt (5) umfasst, wobei der zweite Rückenlehnenabschnitt (5) gegenüber dem ersten Rückenlehnenabschnitt (4) mittels einer zumindest in Sitzbreitenrichtung (1y) gerichteten Verlagerungsbewegung verlagerbar ist,
**dadurch gekennzeichnet, dass**
in einer ersten verlagerten Position (P1) des zweiten Rückenlehnenabschnitts (5) zwischen dem ersten Rückenlehnenabschnitt (4) und dem zweiten Rückenlehnenabschnitt (5) eine die erste verlagerte Position (P1) des zweiten Rückenlehnenabschnitts (5) sichernde mechanische Wechselwirkung ausgebildet ist, welche mittels einer auf den zweiten Rückenlehnenabschnitt (5) aufgebrachten und in Richtung der Verlagerungsbewegung wirkenden Kraft (F) lösbar ist, wobei eine Arretiereinrichtung (6) vorgesehen ist, welche einen am ersten Rückenlehnenabschnitt (4) angeordneten ersten Arretierabschnitt (7) und einen am zweiten Rückenlehnenabschnitt (5) angeordneten zweiten Arretierabschnitt (8) umfasst, wobei der erste Arretierabschnitt (7) eine Kurvenkulisse (12) umfasst, welche Führungskurvenabschnitte (12a, 12b) aufweist, innerhalb welcher ein erstes Ende (13a) eines Hakenelements (13) des zweiten Arretierabschnitts (8) führbar ist, und welche eine Arretierposition (12c) aufweist, an welcher das Hakenelement (13) arretierbar ist.

2. Fahrzeugsitz (1) nach Anspruch 1,
**dadurch gekennzeichnet, dass**
das Hakenelement (13) des zweiten Arretierabschnitts (8) mittels eines zweiten Endes (13b) schwenkbar um eine Achse (19), welche in der ersten verlagerten Position (P2) des zweiten Rückenlehnenabschnitts (5) bevorzugt senkrecht zur Kurvenkulisse (12) angeordnet ist, gelagert ist.

3. Fahrzeugsitz (1) nach einem der vorhergehenden Ansprüche,
**dadurch gekennzeichnet, dass**
eine Rückstelleinrichtung (9) vorgesehen ist, welche ein mit dem ersten Rückenlehnenabschnitt (4) und dem zweiten Rückenlehnenabschnitt (5) verbundenes Energiespeicherelement (10) umfasst, welches geeignet und dazu ausgebildet ist, eine aus der Verlagerungsbewegung des zweiten Rückenlehnenabschnitts (5) gegenüber dem ersten Rückenlehnenabschnitt (4) zur Verfügung gestellte erste Energiemenge zu speichern und zur Durchführung einer Rückverlagerungsbewegung des zweiten Rückenlehnenabschnitts (5) gegenüber dem ersten Rückenlehnenabschnitt (4) zur Verfügung zu stellen.

4. Fahrzeugsitz (1) nach Anspruch 3,
**dadurch gekennzeichnet, dass**
das Energiespeicherelement (10) in Form eines Federelements, beispielsweise eines Bandfederelements oder eines Zugfederelements, ausgestaltet ist.

5. Fahrzeugsitz (1) nach einem der vorhergehenden Ansprüche,
**dadurch gekennzeichnet, dass**
zwischen dem ersten Rückenlehnenabschnitt (4) und dem zweiten Rückenlehnenabschnitt (5) eine Dämpfungseinrichtung (11) angeordnet ist, welche geeignet und dazu ausgebildet ist, eine bei der Rückverlagerungsbewegung des zweiten Rückenlehnenabschnitts (5) gegenüber dem ersten Rückenlehnenabschnitt (4) zur Verfügung gestellte überschüssige zweite Energiemenge zu dissipieren.

6. Fahrzeugsitz (1) nach einem der Ansprüche 1-5,
**dadurch gekennzeichnet, dass**
ein Befestigungselement (23) des Energiespeicherelements (10), der erste Arretierabschnitt (7) und/oder die Dämpfungseinrichtung (11) an einem gemeinsamen mit dem ersten Rückenlehnenabschnitt (4) verbundenen Montageelement (18) montiert und/oder zueinander starr angeordnet sind.

7. Fahrzeugsitz (1) nach einem der vorhergehenden Ansprüche,
**dadurch gekennzeichnet, dass**
der zweite Rückenlehnenabschnitt (5) mittels einer Führungseinrichtung (15) am ersten Rückenlehnenabschnitt (4) befestigt ist, wobei die Verlagerungsbewegung des zweiten Rückenlehnenabschnitts (5) mittels der Führungseinrichtung (15) durchführbar ist.

8. Fahrzeugsitz (1) nach Anspruch 6,
**dadurch gekennzeichnet, dass**
die Führungseinrichtung (15) das Montageelement (18) und zwei in Sitzhöhenrichtung (1z) zueinander beabstandet angeordnete stangenförmige Führungselemente (16, 17) umfasst, wobei das Montageelement (18) gegenüber zumindest einem der Führungselemente (16, 17) gleit- und/oder wälzgelagert ist.

## Claims

1. Vehicle seat (1) having a seat part (2) and a backrest part (3) which comprises a first backrest portion (4) and a second backrest portion (5) arranged above said first backrest portion in a seat height direction (1z), wherein the second backrest portion (5) is displaceable relative to the first backrest portion (4) by means of a displacement movement directed at least in a seat width direction (1y),
**characterised in that**,
in a first displaced position (P1) of the second backrest portion (5), a mechanical interaction is formed between the first backrest portion (4) and the second backrest portion (5), which secures the first displaced position (P1) of the second backrest portion (5) and which can be released by means of a force (F) exerted on the second backrest portion (5) and acting in the direction of the displacement movement, wherein a locking device (6) is provided which comprises a first locking portion (7) arranged on the first backrest portion (4) and a second locking portion (8) arranged on the second backrest portion (5), wherein the first locking portion (7) comprises a curve slot (12) having guide curve portions (12a, 12b) within which a first end (13a) of a hook member (13) of the second locking portion (8) is guidable, and having a locking position (12c) at which the hook member (13) is lockable.

2. Vehicle seat (1) according to claim 1,
**characterised in that**
the hook member (13) of the second locking portion (8) is pivotably mounted by means of a second end (13b) around an axis (19) which, in the first displaced position (P2) of the second backrest portion (5), is arranged preferably perpendicularly to the curve slot (12).

3. Vehicle seat (1) according to any of the preceding claims,
**characterised in that**
a reset device (9) is provided which comprises an energy-storing member (10) connected to the first backrest portion (4) and the second backrest portion (5), said energy-storing member being adapted and formed in such a manner that a first amount of energy provided from the displacement movement of the second backrest portion (5) relative to the first backrest portion (4) is stored and provided in order to perform a backwards displacement movement of the second backrest portion (5) relative to the first backrest portion (4).

4. Vehicle seat (1) according to claim 3,
**characterised in that**
the energy-storing member (10) is in the form of a spring member, for example a band spring member or a tension spring member.

5. Vehicle seat (1) according to any of the preceding claims,
**characterised in that**,
a damping device (11) is arranged between the first backrest portion (4) and the second backrest portion (5), said damping device being adapted and formed to dissipate an excess second amount of energy provided during the backwards displacement movement of the second backrest portion (5) relative to the first backrest portion (4).

6. Vehicle seat (1) according to any of claims 1-5,
**characterised in that**
a fastening member (23) of the energy-storing member (10), the first locking portion (7) and/or the damping device (11) are mounted and/or rigidly arranged relative to one another on a common mounting member (18) connected to the first backrest portion (4).

7. Vehicle seat (1) according to any of the preceding claims,
**characterised in that**
the second backrest portion (5) is fastened to the first backrest portion (4) by means of a guide device (15), wherein the displacement movement of the second backrest portion (5) can be performed by means of the guide device (15).

8. Vehicle seat (1) according to claim 6,
**characterised in that**
the guide device (15) comprises the mounting member (18) and two rod-shaped guide members (16, 17) arranged at a distance from one another in the seat height direction (1z), wherein the mounting member (18) is mounted sliding and/or rolling relative to at least one of the guide members (16, 17).

## Revendications

1. Siège de véhicule (1) ayant une partie assise (2) et une partie dossier (3), laquelle comporte une première section de dossier (4) et une seconde section de dossier (5) disposée au-dessus de celle-ci dans la direction de hauteur de siège (1z), la seconde section de dossier (5) étant déplaçable par rapport à la première section de dossier (4) au moyen d'un mouvement de déplacement dirigé au moins dans la direction de largeur de siège (1y),
**caractérisé par le fait que**
dans une première position déplacée (P1) de la seconde section de dossier (5), entre la première section de dossier (4) et la seconde section de dossier (5) est réalisée une interaction mécanique qui fixe la première position déplacée (P1) de la seconde section de dossier (5) et qui est libérable au moyen d'une force (F) appliquée sur la seconde section de dossier (5) et agissant en direction du mouvement de déplacement, un dispositif d'arrêt (6) étant prévu, lequel comporte une première section d'arrêt (7) disposée sur la première section de dossier (4) et une seconde section d'arrêt (8) disposée sur la seconde section de dossier (5), la première section d'arrêt (7) comportant une coulisse courbe (12), laquelle présente des sections courbes de guidage (12a, 12b), à l'intérieur desquelles une première extrémité (13a) d'un élément crochet (13) de la seconde section d'arrêt (8) est apte à être guidée, et laquelle présente une position d'arrêt (12c), à laquelle l'élément crochet (13) est apte à être arrêté.

2. Siège de véhicule (1) selon la revendication 1,
**caractérisé par le fait que**
l'élément crochet (13) de la seconde section d'arrêt (8) est monté pivotant au moyen d'une seconde extrémité (13b) autour d'un axe (19), lequel, dans la première position déplacée (P2) de la seconde section de dossier (5), est disposé de préférence perpendiculairement à la coulisse courbe (12).

3. Siège de véhicule (1) selon l'une des revendications précédentes,
**caractérisé par le fait qu'**
un dispositif de rappel (9) est prévu, lequel comporte un élément de stockage d'énergie (10) relié à la première section de dossier (4) et à la seconde section de dossier (5), lequel est conçu et est réalisé pour stocker une première quantité d'énergie fournie par le mouvement de déplacement de la seconde section de dossier (5) par rapport à la première section de dossier (4) et pour fournir celle-ci pour la conduite d'un mouvement de déplacement en retour de la seconde section de dossier (5) par rapport à la première section de dossier (4).

4. Siège de véhicule (1) selon la revendication 3,
**caractérisé par le fait que**
l'élément de stockage d'énergie (10) est réalisé sous forme d'un élément ressort, par exemple un élément ressort à lame ou un élément ressort de traction.

5. Siège de véhicule (1) selon l'une des revendications précédentes,
**caractérisé par le fait qu'**
entre la première section de dossier (4) et la seconde section de dossier (5) est disposé un dispositif d'amortissement (11), lequel est conçu et réalisé pour dissiper une seconde quantité d'énergie en excès fournie lors du mouvement de déplacement en retour de la seconde section de dossier (5) par rapport à la première section de dossier (4).

6. Siège de véhicule (1) selon l'une des revendications 1 à 5,
**caractérisé par le fait qu'**
un élément de fixation (23) de l'élément de stockage d'énergie (10), la première section d'arrêt (7) et/ou le dispositif d'amortissement (11) sont montés et/ou disposés de façon rigide l'un par rapport à l'autre sur un élément de montage commun (18) relié à la première section de dossier (4).

7. Siège de véhicule (1) selon l'une des revendications précédentes,
**caractérisé par le fait que**
la seconde section de dossier (5) est fixée à la première section de dossier (4) au moyen d'un dispositif de guidage (15), le mouvement de déplacement de la seconde section de dossier (5) pouvant être effectué au moyen du dispositif de guidage (15).

8. Siège de véhicule (1) selon la revendication 6,
**caractérisé par le fait que**
le dispositif de guidage (15) comporte l'élément de montage (18) et deux éléments de guidage (16, 17) en forme de tige disposés à une distance l'un de l'autre dans la direction de hauteur de siège (1z), l'élément de montage (18) étant monté coulissant et/ou roulant par rapport à au moins l'un des éléments de guidage (16, 17).
